# EUROPÄISCHE PATENTSCHRIFT

(11) **EP 0 710 585 B1**
(45) Veröffentlichungstag und Bekanntmachung des Hinweises auf die Patenterteilung: **12.11.1997**
(21) Anmeldenummer: 95114432.8
(22) Anmeldetag: 14.09.1995
(51) Int. Cl.: B60R 5/00

(54) **Transportvorrichtung für Kraftfahrzeuge, wie z.B. für Kombinationskraftwagen oder Grossraum-Personenkraftwagen**
Transport device in motor vehicles such as estate cars or large-volume passenger cars
Dispositif de transport dans des véhicules automobiles comme par exemple véhicules de type break ou familial à grand volume intérieur

(30) Priorität: 03.11.1994 DE 4438909
(43) Veröffentlichungstag der Anmeldung: 08.05.1996
(73) Patentinhaber: Butz Fahrzeugteile GmbH, 99713 Ebeleben (DE)
(72) Erfinder: Butz, Peter, D-40764 Langenfeld (DE); Sitzler, Wolfgang, D-42111 Wuppertal (DE)
(74) Vertreter: Patentanwälte Ostriga & Sonnet

(56) Entgegenhaltungen:
- DE-A- 3 738 931
- DE-C- 3 901 354
- DE-U- 9 417 440

## Beschreibung

Die Erfindung betrifft eine Transportvorrichtung für Kraftfahrzeuge, wie z.B. für Kombinationskraftwagen oder Großraum-Personenkraftwagen, entsprechend dem Oberbegriff des Anspruchs 1.

Eine derartige Transportvorrichtung ist in der DE 39 01 354 C2 beschrieben. Insbesondere ist hinzuweisen auf eine in den Fig. 5 und 6 der DE 39 01 354 C2 beschriebenen Ausführungsform, gemäß welcher fahrzeugseitig eine sich etwa in Höhe der hinteren Sitzlehnen erstreckende Traverse vorgesehen ist. An letzterer ist eine U-förmige Konsole mit ihrem U-Steg hängend befestigt, so daß die beiden U-Schenkel frei nach unten ragen. Die Innen- bzw. Unterfläche der Traverse stellt die Einbauebene dar, welche für die Orientierung eines Rahmengehäuses entweder in dessen Ruheposition oder in dessen Betriebsposition maßgeblich ist. Die beiden U-Schenkel halten das Rahmengehäuse an einer aus zwei rahmengehäuseseitigen Schwenkzapfen bestehenden Schwenkachse.

Das Rahmengehäuse gemäß der DE 39 01 354 C2 dient der Aufnahme eines zu einem Stauvolumen verkleinerbaren, insbesondere zusammenschieb- oder faltbaren, sackartigen od. dgl. Behälters für langgestrecktes Ladegut, wie z.B. für Skier. Zugleich umschließt das Rahmengehäuse einen Durchladekanal.

Das Rahmengehäuse gemäß der DE 39 01 354 C2 ist Bestandteil einer etwa streichholzschachtelartigen Anordnung mit einer Außenhülse als Aufnahmeraum, in den hinein das den zusammengestauten Behälter aufnehmende Rahmengehäuse einschiebbar bzw. aus welchem heraus in umgekehrter Richtung das Rahmengehäuse ausziehbar ist. Der hülsenartige Aufnahmeraum wird mitsamt dem in ihn eingeschobenen Rahmengehäuse zur Überführung in die Ruheposition unterseitig an die vorerwähnte Traverse angeklappt.

Um die bekannte Vorrichtung in ihre Betriebsposition zu versetzen, wird der hülsenartige Aufnahmeraum um die erwähnten Schwenkzapfen herum nach unten geschwenkt und das Rahmengehäuse aus dem hülsenartigen Aufnahmeraum herausgezogen, wobei die Querschnittsebene des Durchladekanals im wesentlichen senkrecht auf der Ebene des Einbaufeldes steht, die von der Unterfläche der Traverse gebildet ist. Der sackartige Behälter kann folglich in seine ausgestreckte Lage zwischen benachbarten Sitzlehnen versetzt und anschließend mit langgestrecktem Ladegut bestückt werden.

Ausgehend von der Transportvorrichtung gemäß der DE 39 01 354 C2, liegt der Erfindung die Aufgabe zugrunde, die bekannte Transportvorrichtung so umzugestalten, daß sie eine noch universellere Anwendung als bisher gestattet.

Entsprechend der Erfindung wird diese Aufnahme dadurch gelöst, daß der Aufnahmeraum eine etwa kastenartige Umgrenzung darstellt und das Einbaufeld vom Boden des Aufnahmeraums selbst gebildet oder von der kastenartigen Umgrenzung selbst zumindest als Ebene definiert ist, daß der Aufnahmeraum mittels eines im Abstand vom Einbaufeld gegenüberliegend anzuordnenden Deckels verschließbar ist, daß das Rahmengehäuse am Aufnahmeraum in einer zum Einbaufeld im wesentlichen senkrechten Betriebsposition lösbar festlegbar ist, und daß der Deckel unabhängig vom Rahmengehäuse handhabbar ist.

Entsprechend der Erfindung bildet der Aufnahmeraum selbst, der eine etwa kastenartige Umgrenzung im weitesten Sinne darstellt, das Einbaufeld. Auf diesem Einbaufeld steht der Querschnitt des Durchladekanals im Betriebszustand der Transportvorrichtung senkrecht. Die erfindungsgemäße Transportvorrichtung ist demnach - vom Grundsatz her betrachtet - weitgehend unabhängig von einem besonderen unmittelbaren Einbaufeld des Kraftfahrzeuges, da sie das Einbaufeld selbst zur Verfügung stellt bzw. selbst definiert.

Außerdem ist der Aufnahmeraum, welcher das Rahmengehäuse und den zusammengestauten Behälter (z.B. am Boden des Aufnahmeraumes) aufnimmt, mittels eines im Abstand vom Einbaufeld gegenüberliegend anzuordnenden Deckels verschließbar, wodurch das den Behälter aufnehmende Rahmengehäuse unauffällig mitgeführt werden kann.

Zugleich ist das Rahmengehäuse am Aufnahmeraum in einer zur Ebene des Einbaufeldes bzw. des Bodens im wesentlichen senkrechten Betriebsposition lösbar festlegbar. Wenn das Rahmengehäuse am Aufnahmeraum lösbar festgelegt ist, kann der Behälter in seine ausgestreckte Position übergeführt, z.B. entfaltet oder auseinandergeschoben, werden. Der zuvor den Aufnahmeraum verschließende Deckel wird zuvor von der Entnahmeöffnung des Aufnahmeraums entfernt. Da der Deckel unabhängig vom Rahmengehäuse handhabbar ist, kann er entweder beiseitegelegt, d.h. beiseitegeschoben, beiseitegeklappt oder vom Aufnahmeraum entfernt und einer der Transportvorrichtung dienenden besonderen Verwendung zugeführt werden.

In weiterer Ausgestaltung der Erfindung ist der Deckel mittels einer lösbaren Halterung an der kastenartigen Umgrenzung angeordnet.

Die lösbare Halterung kann von einem Scharnier gebildet sein, welches z.B. aus zwei mittels einer Achse aneinandergekuppelten Scharniergelenkhälften besteht.

Entsprechend der Erfindung kann das Scharnier ein Steckscharnier sein, welches entsprechend einer Erfindungsvariante von einer Steckzapfen-Steckloch-Anordnung gebildet ist. Dabei kann der Deckel an einer Seitenkante vorragende Steckzapfen aufweisen, welche in von der kastenartigen Umgrenzung gebildete Stecklöcher einsteckbar sind.

Eine Sonderfunktion des Deckels kann darin bestehen, daß dieser der geschlossenen Stirnseite des sich in seiner Betriebslage befindlichen ausgestreckten Behälters als Verstärkung zuzuordnen ist. Eine solche Verstärkung ist wichtig, um das bei einem Aufprall oder bei einem abrupten Bremsvorgang in Fahrtrichtung beschleunigte Ladegut sicher abzufangen.

Eine zweckmäßige Ausführungsform besteht in diesem Zusammenhang darin, daß der Deckel außen an der geschlossenen Stirnseite des Behälters befestigt ist. Wenn demnach der Aufnahmeraum durch Abheben des Deckels geöffnet und das Rahmengehäuse in seine zum Boden des Aufnahmeraumes senkrechte Betriebsposition versetzt wird, dient der Deckel in zweckmäßiger Weise zugleich als Handhabe beim Ausstrecken des z.B. sackartigen Behälters.

Eine Erhöhung der inneren Sicherheit geschieht entsprechend weiteren Erfindungsmerkmalen dadurch, daß der Deckel in der ausgestreckten Position des Behälters karosserieseitig lösbar zu befestigen ist. Dabei sieht die Erfindung vor, die Steckzapfen des Deckels in ausgestreckter Betriebsposition des Behälters in karosserieseitige Stecklöcher einzusetzen.

Eine andere zweckmäßige Ausführungsform entsprechend der Erfindung besteht darin, daß die kastenartige Umgrenzung einem Karosserieteil, wie Karosserieseitenwand, Karosseriedach oder Karosserieboden, zugeordnet ist. Entsprechend einer zweckmäßigen Ausführungsform kann die kastenartige Umgrenzung in das Karosseriebauteil eingelassen sein.

Andererseits sieht die Erfindung auch vor, daß die kastenartige Umgrenzung eine gegebenenfalls von der Karosserie lösbare, gesonderte Baugruppe bildet. Für den Fall, daß die gesonderte Baugruppe eine lösbare Einheit darstellt, kann die gesamte Transportvorrichtung - etwa wie ein Koffer - aus dem Kraftwagen, z.B. aus einer Großraumlimousine, entfernt und bei Bedarf wiederum an einer geeigneten Stelle im Innenraum des Kraftfahrzeugs lösbar angebracht werden.

Für den Fall, daß die kastenartige Umgrenzung zwar eine gesonderte, im Regelfall indessen nicht von der Karosserie lösbare, gesonderte Baugruppe darstellt, kann letztere von einer festen oder schwenkbaren Armlehne gebildet sein. In diesem Zusammenhang stellt der Deckel die obere Armauflagefläche der Armlehne dar, wobei der Deckel mit seiner einen Längsseite an einem die kastenartige Umgrenzung mit dem Boden bildenden Armlehnen-Grundkörper klappbar angelenkt ist.

Eine für alle Ausführungsvarianten zweckmäßige Anordnung des Rahmengehäuses besteht darin, daß letzteres mittels eines Gelenks, wie z.B. mittels eines Scharniergelenks, am oder benachbart dem Boden der kastenartigen Umgrenzung angelenkt und in seiner zum Boden im wesentlichen senkrechten Betriebsposition mittels mindestens einer Klappstütze lösbar festlegbar ist.

In den Zeichnungen sind bevorzugte Ausführungsbeispiele entsprechend der Erfindung dargestellt, es zeigt
Fig. 1 eine mehr schematische, teilweise, räumliche Innenansicht des zwischen zwei Einzelsitzen einer Großraumlimousine befindlichen Stauraums bei in ihrer Ruheposition befindlichen Transportvorrichtung,
Fig. 2 in Anlehnung an Fig. 1 die Transportvorrichtung in ihrer Betriebsstellung,
Fig. 3 eine Ausführungsvariante entsprechend der Erfindung und
Fig. 4 die Ausführungsvariante gemäß Fig. 3 bei ihrer Verwendung als Mittelarmlehne.

In den Zeichnungen ist eine Transportvorrichtung unabhängig von ihrer jeweiligen Ausführungsform stets mit der Bezugsziffer 10 bezeichnet.

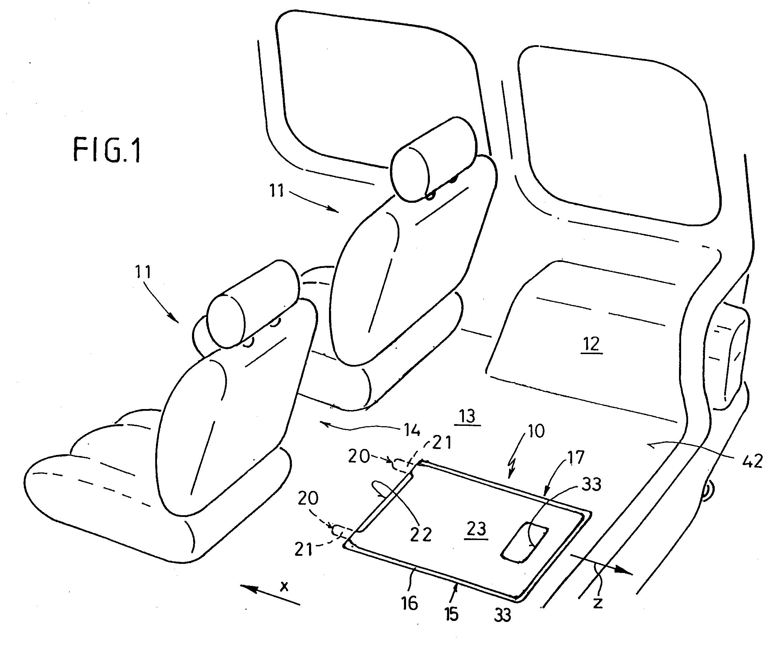

In Fig. 1 ist hinter zwei Einzelsitzen 11 einer Großraumlimousine ein seitlich durch Radkästen 12 begrenzter Laderaumboden 13 dargestellt. Zwischen den beiden Einzelsitzen 11 befindet sich eine Lücke 14.

Der Laderaumboden 13 weist eine Aussparung 15 auf, in welche ein mit einem oberen Auflagerahmen 16 versehener Aufnahmekasten 17 eingelassen ist.

Der Aufnahmekasten 17 weist unterhalb im Abstand vom Auflagerahmen 16 einen Boden B auf, der das Einbaufeld E bildet. Der Aufnahmekasten 17, eine kastenartige Umgrenzung, weist sich senkrecht zum Einbaufeld E erstreckende Schmalwände 18 und Längswände 19 auf.

Benachbart der in Fahrtrichtung x vorderen Schmalwand 18 sind zwei Stecklöcher 20 innerhalb des Laderaumbodens 13 unterhalb der Ladefläche 42 vorgesehen.

Die Stecklöcher 20 dienen der Aufnahme von Steckzapfen 21, die an einer Schmalseite 22 eines Deckels 23 vorragen.

Der Deckel 23 ist an der vorderen geschlossenen Stirnseite 24 eines etwa sackartigen Behälters, nämlich eines Skisacks 25, befestigt.

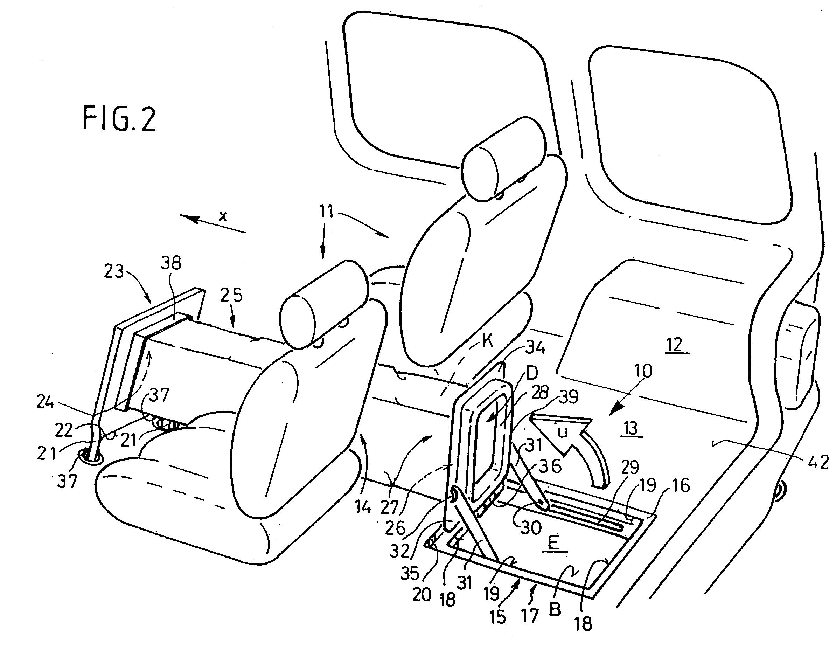

Die hintere offene Stirnseite 26 des Behälters 25, welche zugleich die in Kreuzschraffur (s. Fig. 2) angelegte Durchladeöffnung D (zugleich Querschnittsfläche des Durchladekanals K) begrenzt, ist an einem Rahmengehäuse 27 gehalten. Das Rahmengehäuse 27 bildet, wie anhand von Fig. 2 vorstellbar, zugleich einen Stauraum 28 für den Skisack 25. Letzterer ist bis zu einem Stauvolumen verkleinerbar, welches im Stauraum 28 des Rahmengehäuses 27 hinreichend Platz findet.

Die Längswände 19 des Aufnahmekastens 17 sind jeweils mit einer Kulisse 29 zur Führung eines bei 30 angeordneten Kulissensteins versehen, der jeweils am unteren freien Ende einer Klappstütze 31 angeordnet ist. Die anderen freien Enden der beiden Klappstützen 31 sind an Gelenkstellen 32 am Rahmengehäuse 27 angelenkt.

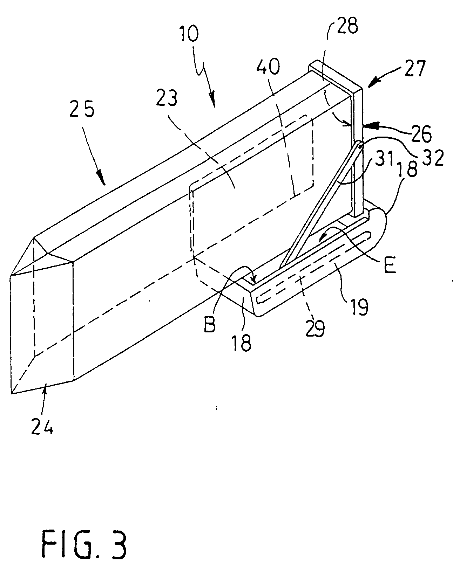

Gemäß Fig. 3 steht das Rahmengehäuse 27 einschließlich seiner Durchladeöffnung D senkrecht auf der Einbauebene E. Hierbei sind die Kulissensteine 30 in nicht gezeigten Rastöffnungen am jeweils bezüglich der Fahrtrichtung x vorderen Ende der jeweiligen Kulisse 29 lösbar eingerastet.

Die Funktion der Transportvorrichtung 10 ist unter Bezugnahme auf die Fig. 1 und 2 folgende:

Man erfaßt zunächst den Deckel 23 in seiner Hintergriffsmulde 33, hebt diesen an und zieht ihn in Richtung z nach hinten, so daß sich die Steckzapfen 21 aus den ihnen zugeordneten Stecklöchern 22 herausbewegen. Daraufhin wird der Deckel 23 etwas in Schwenkrichtung u nach vorn und oben verschwenkt. Hierbei kann man zugleich einen Flansch 34 des Rahmengehäuses 27 untergreifen, um das Rahmengehäuse 27 in seine Betriebsposition gemäß Fig. 2 hochzuschwenken.

Der in Fahrtrichtung x vordere Flansch 35 des Rahmengehäuses 27 ist mittels eines Scharniergelenks 36 an der vorderen Schmalwand 18 des Aufnahmekastens 17 angelenkt.

Sodann wird der Deckel 23, welcher an der geschlossenen Stirnseite 24 des Skisacks 25 befestigt ist, in Fahrtrichtung x durch die Lücke 14 zwischen den Einzelsitzen 11 nach vorn gezogen, so daß die Steckzapfen 21 in besondere Stecklöcher 37 im Fahrzeugboden eingesteckt werden können.

Nun kann das nicht gezeigte Ladegut, z.B. Skier, durch die Durchladeöffnung D hindurch in den Skisack 25 eingeführt werden, wobei der an der geschlossenen Stirnseite 24 des Skisacks 25 angeordnete Deckel 23 einen Sicherheits-Aufprallschutz für das Ladegut bildet.

Aus der Betriebsposition gemäß Fig. 2 kann der Skisack 25 in analog umgekehrter Weise wiederum in seine Ruheposition gemäß Fig. 1 versetzt werden. Hierbei erleichtert ein an der Rückseite des Deckels 23 vorgesehener Halte- und Zentrierrahmen 38 ein geordnetes Zusammenfalten des Skisackes 25 zu seinem Stauvolumen, welches vom Stauraum 28 des Rahmengehäuses 27 aufgenommen werden soll. Der Halte- und Zentrierrahmen 38 greift zudem von oben her in das Rahmengehäuse 27 ein, welches in seiner Ruheposition mit der unteren Stirnfläche eines den Stauraum 28 begrenzenden geschlossenen Rahmenteils 39 auf dem Boden B (Einbaufeld E) aufliegt.

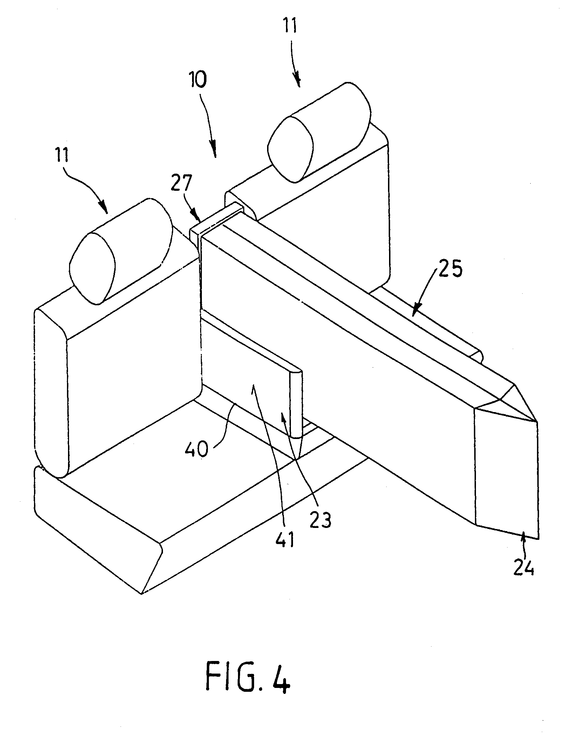

Bei der Ausführungsform gemäß den Fig. 3 und 4 bildet die Transportvorrichtung 10 eine gesonderte Baugruppe.

Wie aus Fig. 3 am besten zu erkennen, stellt der Aufnahmekasten 17 eine unabhängig handhabbare Baugruppe dar, deren grundsätzlicher technischer Aufbau der insbesondere in Fig. 2 gezeigten Ausführungsform entspricht. Lediglich der Deckel 23 ist seitlich mit einer Längsseite 40 mittels eines nicht dargestellten Scharniergelenks am Aufnahmekasten 17 klappbar angelenkt. Der Deckel 23 ist in diesem Fall zwar unabhängig vom Rahmengehäuse 27 handhabbar, jedoch nicht als Prallschutz gemäß Fig. 2 verwendbar. In diesem Falle ist der Skisack 25 an seiner geschlossenen Stirnseite 24 mit textilen Verstärkungen als Aufprallschutz versehen.

Auch nimmt das Rahmengehäuse 27 entsprechend der in den Fig. 3 und 4 dargestellten Ausführungsform nicht das gesamte Stauvolumen des zusammengefalteten Skisacks 25 auf, sondern nur einen Teil davon, dient ansonsten also nur als Anfalthilfe. Das restliche Stauvolumen des Skisacks 25 findet Aufnahme zwischen dem Boden B und den Längs- und Schmalwänden 19, 18.

Die Transportvorrichtung 10 gemäß Fig. 3 kann, wenn das eingeklappte Rahmengehäuse 27 im Aufnahmekasten 17 angeordnet und der Deckel 23 geschlossen ist, mittels eines nicht dargestellten Griffs wie ein kleiner Koffer mitgeführt und bei Bedarf sowie an geeigneter Stelle eines Kraftfahrzeuges angebracht werden.

In Fig. 4 ist mehr schematisch dargestellt, daß die Transportvorrichtung 10 gemäß Fig. 3 als Mittelarmlehne verwendet werden kann. Grundsätzlich entspricht die Darstellung gemäß Fig. 4 der Transportvorrichtung 10 der Darstellung gemäß Fig. 3. Anhand von Fig. 4 ist zusätzlich vorstellbar, daß der Deckel 23 in seiner Geschlossenenstellung, in welcher sich die Transportvorrichtung 10 zugleich in ihrer Ruheposition befindet, eine zweckmäßig gepolsterte Armauflagefläche 41 bilden kann.

Allen dargestellten Ausführungsformen ist gemeinsam, daß jede Transportvorrichtung 10 eine im wesentlichen einbaufertige Baugruppe bildet, welche das Einbaufeld E entweder als körperlich vorhandenen Boden B oder zumindest als zwischen einer kastenartigen Umgrenzung aufgespannte Ebene unabhängig vom Kraftwagen selbst definiert.

## Patentansprüche

1. Transportvorrichtung (10) für Kraftfahrzeuge, wie z.B. für Kombinationskraftwagen oder Großraum-Personenkraftwagen, mit einem zu einem Stauvolumen verkleinerbaren, insbesondere zusammenschieb- oder - faltbaren, sackartigen od. dgl. Behälter (25) für langgestrecktes Ladegut, wie z.B. für Skier, und mit einem das Behälter-Stauvolumen mindestens teilweise aufnehmenden, einen Durchladekanal (K) umschließenden Rahmengehäuse (27), welches in seiner Ruheposition gemeinsam mit dem verkleinerten Behälter (25) in einem Aufnahmeraum (17) aufgenommen ist und an einem Einbaufeld (E) anliegt und welches in seiner vom Aufnahmeraum (17) freigegebenen Betriebsposition vom Einbaufeld (E) vorragt, wobei die Querschnittsebene (D) des Durchladekanals (K) im wesentlichen senkrecht auf der Ebene des Einbaufeldes (E) steht, dadurch gekennzeichnet, daß der Aufnahmeraum eine etwa kastenartige Umgrenzung (17) darstellt und das Einbaufeld (E) vom Boden (B) des Aufnahmeraums selbst gebildet oder von der kastenartigen Umgrenzung (17) selbst zumindest als Ebene definiert ist, daß der Aufnahmeraum mittels eines im Abstand vom Einbaufeld (E) gegenüberliegend anzuordnenden Deckels (23) verschließbar ist, daß das Rahmengehäuse (27) am Aufnahmeraum in einer zum Einbaufeld (E) im wesentlichen senkrechten Betriebsposition lösbar festlegbar ist, und daß der Deckel (23) unabhängig vom Rahmengehäuse (27) handhabbar ist.

2. Transportvorrichtung nach Anspruch 1, dadurch gekennzeichnet, daß der Deckel (23) mittels einer lösbaren Halterung (20, 21; bei 40) an der kastenartigen Umgrenzung (17) angeordnet ist.

3. Transportvorrichtung nach Anspruch 2, dadurch gekennzeichnet, daß die lösbare Halterung von einem Scharnier (20, 21; bei 40) gebildet ist.

4. Transportvorrichtung nach Anspruch 3, dadurch gekennzeichnet, daß das Scharnier aus zwei mittels einer Achse aneinandergekuppelten Scharniergelenkhälften besteht.

5. Transportvorrichtung nach Anspruch 3, dadurch gekennzeichnet, daß das Scharnier ein Steckscharnier (20, 21) ist.

6. Transportvorrichtung nach Anspruch 5, dadurch gekennzeichnet, daß das Steckscharnier von einer Steckzapfen(21)/Steckloch(20)-Anordnung gebildet ist.

7. Transportvorrichtung nach Anspruch 6, dadurch gekennzeichnet, daß der Deckel (23) an einer Seitenkante (22) vorragende Steckzapfen (21) aufweist, welche in von der kastenartigen Umgrenzung (17) gebildete Stecklöcher (20) einsteckbar sind.

8. Transportvorrichtung nach einem der Ansprüche 1 bis 7, dadurch gekennzeichnet, daß der Deckel (23) der geschlossenen Stirnseite (24) des sich in seiner Betriebslage befindlichen ausgestreckten Behälters (25) als Verstärkung zuzuordnen ist.

9. Transportvorrichtung nach Anspruch 8, dadurch gekennzeichnet, daß der Deckel (23) außen an der geschlossenen Stirnseite (24) des Behälters (25) befestigt ist.

10. Transportvorrichtung nach Anspruch 8 oder nach Anspruch 9, dadurch gekennzeichnet, daß der Deckel (23) in der ausgestreckten Position des Behälters (25) karosserieseitig (bei 37) lösbar zu befestigen ist.

11. Transportvorrichtung nach einem der vorangehenden Ansprüche, dadurch gekennzeichnet, daß die Steckzapfen (21) des Deckels (23) in ausgestreckter Betriebsposition des Behälters (25) in karosserieseitige Stecklöcher (37) einsetzbar sind.

12. Transportvorrichtung nach einem der Ansprüche 1 bis 11, dadurch gekennzeichnet, daß die kastenartige Umgrenzung (17) einem Karosserieteil, wie Karosserieseitenwand, Karosseriedach oder Karosserieboden (13), zugeordnet ist.

13. Transportvorrichtung nach Anspruch 12, dadurch gekennzeichnet, daß die kastenartige Umgrenzung (17) in das Karosseriebauteil (13) eingelassen ist.

14. Transportvorrichtung nach einem der Ansprüche 1 bis 11, dadurch gekennzeichnet, daß die kastenartige Umgrenzung (17) eine ggf. von der Karosserie lösbare, gesonderte Baugruppe bildet.

15. Transportvorrichtung nach Anspruch 14, dadurch gekennzeichnet, daß die gesonderte Baugruppe von einer festen oder schwenkbaren Armlehne gebildet ist.

16. Transportvorrichtung nach Anspruch 15, dadurch gekennzeichnet, daß die obere Armauflagefläche (41) der Armlehne von dem Deckel (23) gebildet ist, welcher mit seiner einen Längsseite (40) an einem die kastenartige Umgrenzung (17) mit dem Boden (B) bildenden Armlehnen-Grundkörper (17) klappbar angelenkt ist.

17. Transportvorrichtung nach einem der Ansprüche 1 bis 16, dadurch gekennzeichnet, daß das Rahmengehäuse (27) mittels eines Gelenks, wie z.B. mittels eines Scharniergelenks (36), am oder benachbart dem Einbaufeld (E) bzw. dem Boden (B) der kastenartigen Umgrenzung (17) angelenkt und in seiner zum Einbaufeld (E) bzw. zum Boden (B) im wesentlichen senkrechten Betriebsposition mittels mindestens einer Klappstütze (31) lösbar festlegbar ist.

## Claims

1. Transport device (10) for motor vehicles, such as for example estate cars or large-capacity motor cars, with a bag-like or similar container (25) for elongated load items, such as skis for example, which container can be reduced in size, in particular telescoped together or folded, to form a stowage volume, and with a frame housing (27) which at least partially receives the stowage volume of the container, encloses a load-through duct (K) and is received, in its inoperative position, in a receiving compartment (17) together with the container (25) which has been reduced in size, and which frame housing rests against an installation zone (E) and protrudes, in its operative position released from the receiving compartment (17), from the said installation zone (E), while the cross-sectional plane (D) of the load-through duct (K) stands essentially perpendicularly on the plane of the installation zone (E), characterised in that the receiving compartment constitutes an approximately box-like enclosure (17) and the installation zone (E) is formed by the floor (B) of the receiving compartment itself or is defined, at least as a plane, by the box-like enclosure (17) itself, that the receiving compartment can be closed by means of a lid (23) which is to be arranged in an oppositely located manner at a distance from the installation zone (E), that the frame housing (27) can be detachably secured on the receiving compartment in an operative position essentially perpendicular to the installation zone (E), and that the lid (23) can be operated independently of the frame housing (27).

2. Transport device according to claim 1, characterised in that the lid (23) is arranged on the box-like enclosure (17) by means of a detachable mounting arrangement (20, 21; at 40).

3. Transport device according to claim 2, characterised in that the detachable mounting arrangement is formed by a hinge (20, 21; at 40).

4. Transport device according to claim 3, characterised in that the hinge consists of two hinge-joint halves coupled to one another by means of a spindle.

5. Transport device according to claim 3, characterised in that the hinge is a plug-in hinge (20, 21).

6. Transport device according to claim 5, characterised in that the plug-in hinge is formed by a plug-in pin (21)/plug-in hole (20) arrangement.

7. Transport device according to claim 6, characterised in that the lid (23) has plug-in pins (21) which protrude at one lateral edge (22) and can be plugged into plug-in holes (20) formed by the box-like enclosure (17).

8. Transport device according to one of claims 1 to 7, characterised in that the lid (23) is to be associated, as a reinforcement, with the closed end face (24) of the extended container (25) when the said container is located in its operative position.

9. Transport device according to claim 8, characterised in that the lid (23) is fastened to the outside of the closed end face (24) of the container (25).

10. Transport device according to claim 8 or 9, characterised in that the lid (23) is to be detachably fastened to the vehicle body (at 37) when the container (25) is in the extended position.

11. Transport device according to one of the preceding claims, characterised in that the plug-in pins (21) on the lid (23) can be inserted in plug-in holes (37) in the vehicle body when the container (25) is in its extended operative position.

12. Transport device according to one of claims 1 to 11, characterised in that the box-like enclosure (17) is associated with a vehicle body part, such as a side wall, the roof or the floor (13) of the vehicle body.

13. Transport device according to claim 12, characterised in that the box-like enclosure (17) is let into the structural part (13) of the vehicle body.

14. Transport device according to one of claims 1 to 11, characterised in that the box-like enclosure (17) forms a separate assembly which may optionally be detachable from the vehicle body.

15. Transport device according to claim 14, characterised in that the separate assembly may be formed by a fixed or pivotable armrest.

16. Transport device according to claim 15, characterised in that the upper, arm-supporting face (41) of the armrest is formed by the lid (23) which is articulatingly attached in a foldable manner by one of its longitudinal sides (40) to a basic armrest body (17) forming, together with the floor (B), the box-like enclosure (17).

17. Transport device according to one of claims 1 to 16, characterised in that the frame housing (27) is articulatingly attached, by means of a joint such as, for example, a hinge joint (36), to, or adjacent to, the installation zone (E) or the floor (B) of the box-like enclosure (17), and can be detachably secured in its operative position, which is essentially perpendicular to the installation zone (E) or to the floor (B), by means of at least one folding support (31).

## Revendications

1. Dispositif de transport (10) pour véhicules automobiles, tels que, par exemple, véhicules de type break ou familial à grand volume intérieur, avec un récipient (25), dont le volume de regroupement est susceptible d'être diminué, récipient susceptible en particulier d'être rapproché ou replié, du genre d'un sac ou analogues, pour un produit de chargement à forme allongée, tel que, par exemple, pour des skis et avec un carter de cadre (27) entourant un canal de passage de chargement (K), recevant au moins partiellement le volume regroupé du récipient, carter de cadre qui est logé, dans sa position de repos, conjointement avec le récipient (25) rapetissé, dans un espace de logement (17) et appuie sur une zone de montage (E) et qui, dans sa position de fonctionnement, après avoir été libéré de l'enceinte de logement (17), fait saillie de la zone de montage (E), le plan (D) de la section transversale du canal de passage de charge (K) étant orienté sensiblement perpendiculairement par rapport au plan de la zone de montage (E), caractérisé en ce que l'espace de logement constitue une enceinte (17) à peu près du genre d'un caisson, et la zone de chargement (E) étant constituée par le fond (E) de l'espace de logement lui-même, ou bien étant définie par l'enceinte (17) du genre d'un caisson elle-même, au moins à titre de plan, en ce que l'enceinte de logement est susceptible d'être obturée au moyen d'un couvercle (23) à disposer en opposition à distance de la zone de montage (E), en ce que le carter de cadre (27) est susceptible d'être fixé de façon amovible dans une position de fonctionnement sensiblement verticale, et en ce que le couvercle (23) est manipulable indépendamment du carter de cadre (27).

2. Dispositif de transport selon la revendication 1, caractérisé en ce que le couvercle (23) est disposé sur l'enceinte (17) du genre d'un caisson, au moyen d'une fixation (20, 21 ; en 40) désolidarisable.

3. Dispositif de transport selon la revendication 2, caractérisé en ce que la fixation désolidarisable est constituée par une charnière (20, 21 ; en 40).

4. Dispositif de transport selon la revendication 3, caractérisé en ce que la charnière est constituée de deux demi-articulations de charnière couplées ensemble au moyen d'un axe.

5. Dispositif de transport selon la revendication 3, caractérisé en ce que la charnière est une charnière à enfichage (20, 21).

6. Dispositif de transport selon la revendication 5, caractérisé en ce que la charnière à enfichage est constituée par un agencement tourillon d'enfichage (21)/trou d'enfichage (20).

7. Dispositif de transport selon la revendication 6, caractérisé en ce que le couvercle (23) présente des tourillons d'enfichage (21) faisant saillie sur une arête latérale (22) et susceptibles d'être enfichés dans des trous d'enfichage (20) constitués par l'enceinte (17) du genre d'un caisson.

8. Dispositif de transport selon l'une des revendications 1 à 7, caractérisé en ce que le couvercle (23) de la face frontale (24) fermée, du récipient (25) déployé, se trouvant dans sa position de fonctionnement, est à associer à titre de renforcement.

9. Dispositif de transport selon la revendication 8, caractérisé en ce que le couvercle (23) est fixé extérieurement sur la face frontale (24) fermée du récipient (25).

10. Dispositif de transport selon la revendication 8 ou la revendication 9, caractérisé en ce que le couvercle (23) est à fixer de façon désolidarisable dans la position déployée du récipient (25), du côté carrosserie (en 37).

11. Dispositif de transport selon l'une des revendications précédentes, caractérisé en ce que les tourillons d'enfichage (21) du couvercle (23) sont susceptibles d'être insérés dans des trous d'enfichage (37) situés du côté carrosserie, lorsque le récipient (25) se trouve en position de fonctionnement déployée.

12. Dispositif de transport selon l'une des revendications 1 à 11, caractérisé en ce que l'enceinte (17) du genre d'un caisson est associée à une partie de carrosserie, telle qu'une paroi latérale de carrosserie, un toit de carrosserie ou un plancher de carrosserie.

13. Dispositif de transport selon la revendication 12, caractérisé en ce que l'enceinte (17) du genre d'un caisson est insérée dans l'élément de construction de carrosserie (13).

14. Dispositif de transport selon l'une des revendications 1 à 11, caractérisé en ce que l'enceinte (17) du genre d'un caisson constitue un groupe de construction séparé, le cas échéant désolidarisable de la carrosserie.

15. Dispositif de transport selon la revendication 14, caractérisé en ce que le groupe de transport séparé est constitué par un accoudoir fixe ou pivotant.

16. Dispositif de transport selon la revendication 15, caractérisé en ce que la surface de pose supérieure pour bras (41) de l'accoudoir est constituée par le couvercle (23) qui est articulé de façon rabattable par l'un de ses côtés longitudinaux (40), sur un corps de base d'accoudoir (17) constituant avec le fond (B) l'enceinte (17) du genre d'un caisson.

17. Dispositif de transport selon l'une des revendications 1 à 16, caractérisé en ce que le carter de cadre (27) est articulé au moyen d'une articulation, telle que, par exemple, au moyen d'une articulation à charnière (36), sur ou au voisinage de la zone de montage (E), respectivement du fond (B) de l'enceinte (17) du genre d'un caisson, et est susceptible d'être fixé de façon désolidarisable dans sa position de fonctionnement sensiblement perpendiculaire par rapport à la zone de montage (E), respectivement par rapport au fond (B), à l'aide d'au moins un appui rabattable (31).
